# EUROPÄISCHE PATENTSCHRIFT

(11) **EP 1 138 617 B1**
(45) Veröffentlichungstag und Bekanntmachung des Hinweises auf die Patenterteilung: **19.05.2004**
(21) Anmeldenummer: 01105789.0
(22) Anmeldetag: 08.03.2001
(51) Int. Cl.: B65G 1/04

(54) **Vorrichtung zum Ein- und Auslagern von Lastträgern in einem Regallager**
Device for storing and retrieving of load carriers in a shelf storage
Dispositif pour stocker et prélever des porte-charges dans un magasin à rayonnage

(30) Priorität: 28.03.2000 DE 10015272
(43) Veröffentlichungstag der Anmeldung: 04.10.2001
(73) Patentinhaber: Siemens Aktiengesellschaft, 80333 München (DE)
(72) Erfinder: Kock, Hubert, 84249 Dülmen (DE); Von Der Strate, Jörg, 90518 Altdorf (DE); Wilhelm, Wulf, 90596 Schwanstetten (DE)
(74) Vertreter: Berg, Peter, Dipl.-Ing.

(56) Entgegenhaltungen:
- GB-A- 1 208 965
- US-A- 3 750 804

## Beschreibung

Die Erfindung betrifft eine Vorrichtung zum Ein- und Auslagern von Lastträgern in Fächer bzw. aus Fächern eines Regallagers, welches neben einer Ladegasse mindestens einseitig ein Regal mit einer Mehrzahl von übereinander und/oder nebeneinander angeordneten Fächern zur Aufnahme von jeweils mindestens einem Lastträger aufweist (US 3 750 804 A).

Bei großen Kompaktlagern, in denen in tiefen Fächern jeweils eine größere Anzahl von Stückgütern, Paletten oder sonstigen Lastträgern hintereinander gelagert werden, sind üblicherweise in jedem Regalfach Fördereinrichtungen mit eigenem Antrieb vorgesehen, um die einzelnen Stückgüter innerhalb des Faches sowie in das Fach hinein und aus dem Fach heraus zu bewegen. In den Ladegassen werden dann diese Stückgüter von Regalbediengeräten bzw. von Vertikalförderern übernommen. Für kleine Zwischenlager, wie sie beispielsweise für Kommissionierarbeitsplätze Verwendung finden, sind die Einrichtungen jedoch in der Regel zu aufwendig. Solche Zwischenlager haben in der Regel nur eine begrenzte Anzahl von Fächern mit geringer Tiefe, in denen jeweils nur ein oder wenige Behälter bzw. Tablare zwischengelagert werden, auf die jedoch ein schneller und wahlfreier Zugriff ermöglicht werden muß.

Es wurde bereits vorgeschlagen, Regalbediengeräte mit teleskopartig ausfahrbaren Greifvorrichtungen zu versehen, um die Behälter aus den einzelnen Regalfächern zu entnehmen, doch ist auf diese Weise der erwünschte hohe Durchsatz nicht erzielbar.

Ziel der Erfindung ist es deswegen, eine Vorrichtung der eingangs genannten Art zu schaffen, die einen wahlfreien Zugriff auf Lastträger in den einzelnen Fächern ermöglicht, dabei eine kostengünstigen Aufbau und eine einfache Steuerung besitzt und einen hohen Durchsatz ermöglicht. Diese Vorrichtung soll insbesondere für kleine Zwischenlager, wie sie an Kommissionierarbeitsplätzen Verwendung finden, geeignet sein, ohne daß sie darauf beschränkt wird.

Erfindungsgemäß wird dieses Ziel erreicht mit einer Vorrichtung der eingangs genannten Art, die folgende Merkmale aufweist:
- in der Ladegasse ist ein vertikal und/oder horizontal verfahrbarer Gassenförderer vorgesehen, der eine Lastaufnahme mit einem horizontalen Ladeförderer trägt, welche ihrerseits eine Antriebseinrichtung aufweist,
- die Lastaufnahme besitzt jeweils an ihrer dem Regal zugewandten Seite ein von der Antriebseinrichtung des Ladeförderers angetriebenes Antriebsrad,
- in jedem Fach ist ein Fachförderer zur Horizontalbewegung der Lastträger vorgesehen und
- jedes Fach besitzt an seinem zur Ladegasse offenen Ende ein mit dem Fachförderer gekoppeltes Abtriebsrad, das derart gelagert ist, daß bei Annäherung des Ladeförderers an ein Fach das Antriebsrad mit dem Abtriebsrad des Faches stirnseitig in Eingriff gelangt und die Bewegung der Antriebseinrichtung auf den Fachförderer überträgt.

Die erfindungsgemäße Ladevorrichtung bildet also mit einem Antriebsrad an dem Ladeförderer und jeweils einem Abtriebsrad am Eingang eines jeden Regalfaches bei Ankopplung an das Fach ein Getriebe, mit dem die Übergabe des Lastträgers, zum Beispiel eines Behälters oder Tablars, von der Lastaufnahme in das jeweilige Fach bzw. umgekehrt erfolgt. Dabei genügt der im den Ladeförderer der Lastaufnahme vorhandene Antrieb, der über das Getriebe auch den jeweiligen Fachförderer antreibt.

Ein separater Antrieb in den Fächern ist demnach nicht erforderlich.

Die Ankopplung des Antriebsrades des Ladeförderers an das Abtriebsrad des jeweiligen Faches kann sehr schnell und unproblematisch erfolgen, wodurch sich der gewünschte hohe Durchsatz erzielen läßt. Das Antriebsrad und das Abtriebsrad können beispielsweise als Reibräder ausgeführt sein. Da aber für verschiedene Anwendungszwecke ein Abrieb möglichst vermieden werden soll, werden vorzugsweise Zahnräder eingesetzt. In beiden Fällen ist die Getriebeankopplung unempfindlich gegenüber Toleranzen beim Anfahren der Lastaufnahme, sowohl in Vertikalrichtung als auch in Horizontalrichtung. Durch entsprechende Gestaltung der Zahnradflankenform bei den Übertriebszahnrädern kann sichergestellt werden, daß diese beim Ankoppeln problemlos ineinander gleiten und sich ausrichten. Ein vertikales Spiel der Lastaufnahme kann zudem dadurch aufgefangen werden, daß das Antriebsrad und das Abtriebsrad unterschiedliche Durchmesser aufweisen. Durch entsprechende Wahl der Materialien kann der Verschleiß gering gehalten werden; außerdem kann durch Wahl bestimmter Materialien, beispielsweise von Kunststoffen, der Geräuschpegel gering gehalten werden.

Vorzugsweise ist die Lastaufnahme auf dem Gassenförderer beweglich gelagert, so daß sie bzw. der Ladeförderer mit dem Antriebsrad zum Ankoppeln in Richtung auf das Regal bewegt werden kann; vorzugsweise ist hierzu ein eigener Antrieb vorgesehen. Um eine besonders gute Auslastung und einen besonders schnellen Durchsatz zu erhalten, ist beiderseits der Ladegasse jeweils ein Regal vorgesehen, das von dem in der Ladegasse befindlichen Gassenförderer bedient wird. Für diesen Fall besitzt die Lastaufnahme auf beiden Enden je ein Antriebsrad zur Ankopplung an einen Fachförderer.

Die Fachförderer und der Ladeförderer können beispielsweise als Rollenbahnen ausgebildet sein, die jeweils über Ketten, Bänder, Gurte oder Riemen angetrieben werden. In gleicher Weise sind aber auch Bandfördereinrichtungen oder ähnliche Vorrichtungen anwendbar.

Die Erfindung wird nachfolgend an einem Ausführungsbeispiel anhand der Zeichnung näher erläutert. Es zeigt
- Figur 1: ein Regallager mit zwei Regalen zu beiden Seiten einer Ladegasse in einer Aufsicht,
- Figur 2: eine Seitenansicht und
- Figur 3: eine Draufsicht des Regallagers von Figur 1,
- Figur 4 und 5: eine schematische, vergrößerte Ansicht der erfindungsgemäßen Ladeeinrichtung in Seitenansicht und in Draufsicht.

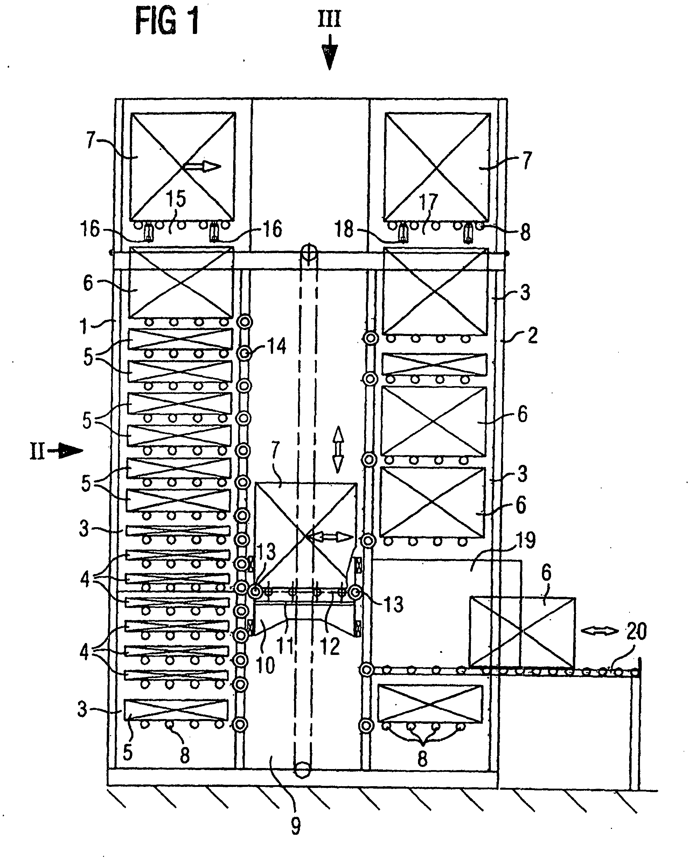

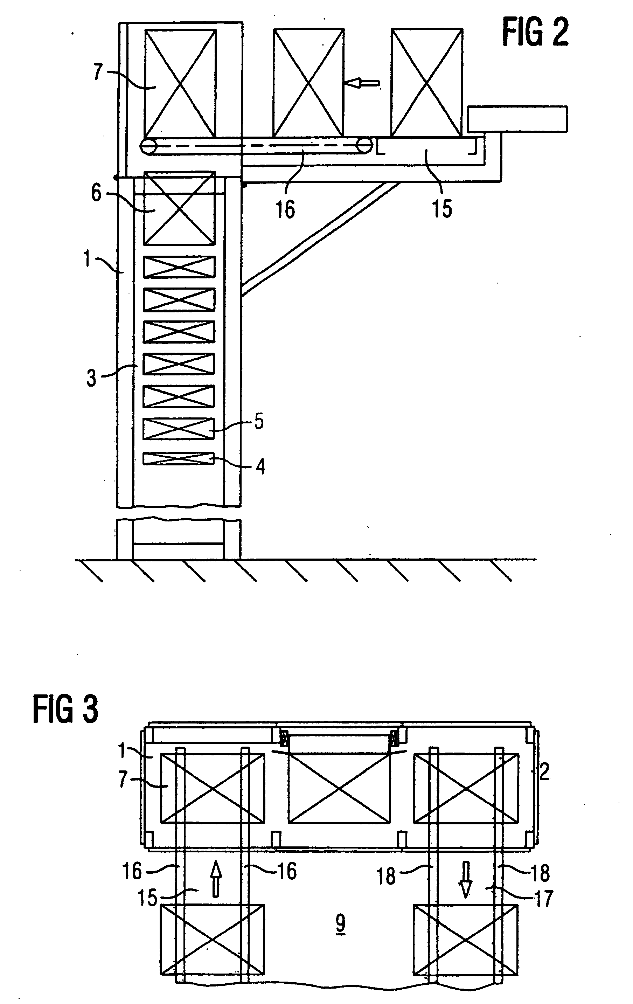

Das in den Figuren 1 bis 3 gezeigte Regallager besitzt einen üblichen Aufbau, wie er für Kommissionierarbeitsplätze verwendet wird. In einem linken Regal 1 und einem rechten Regal 2 sind jeweils übereinander liegende Fächer 3 von jeweils unterschiedlicher Höhe angeordnet, in denen jeweils Lastträger, nämlich Tablare 4 sowie Behälter 5, 6 und 7 von unterschiedlicher Größe zwischengelagert werden. In jedem Fach ist ein Fachförderer vorgesehen, der in Figur 1 jeweils durch schematisch gezeichnete Rollen 8 dargestellt ist. Sonstige Fachunterteilungen sind der Übersichtlichkeit halber nicht gezeigt.

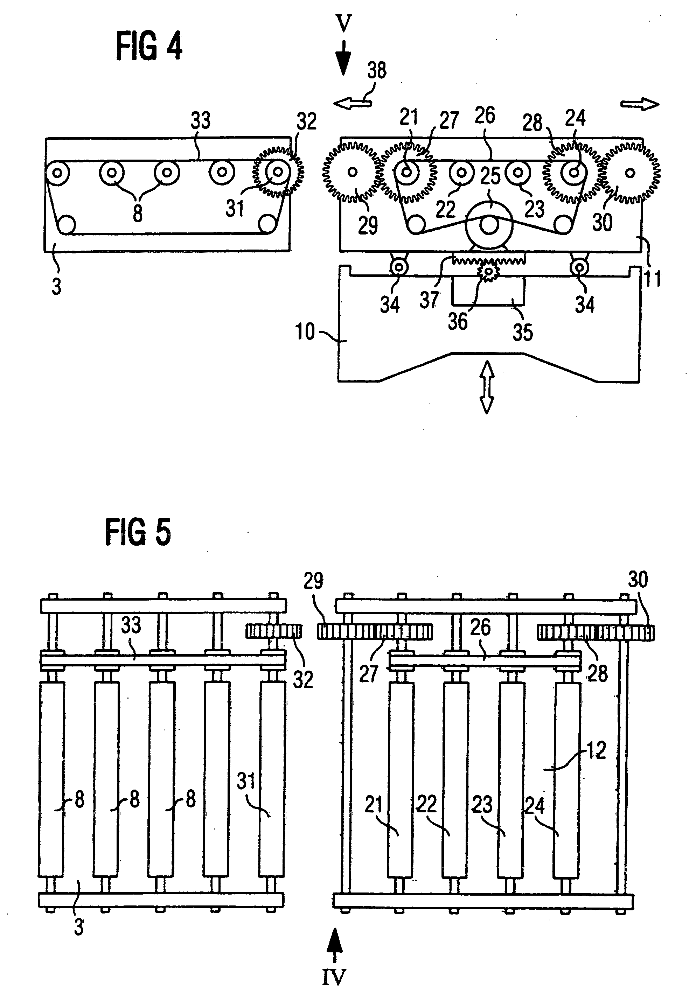

Zwischen den beiden Regalen 1 und 2 ist eine Ladegasse 9 vorgesehen, in der ein Ladeförderer 10 vertikal verfahrbar angeordnet ist. Der Vertikalförderer trägt eine Lastaufnahme 11 mit einem Ladeförderer 12, die später noch anhand der Figuren 4 und 5 genauer beschrieben werden. Der Ladeförderer besitzt an beiden den Regalen 1 und 2 zugewandten Enden jeweils ein Antriebs-Zahnrad 13, während ein entsprechendes Abtriebs-Zahnrad 14 am Eingang eines jeden Faches 3 vorgesehen ist.

Auf der Oberseite des Regals 1 ist eine Zuführbahn 15 mit Transportbändern 16 vorgesehen, während über dem Regal 2 eine Rückführbahn 17 mit Transportbändern 18 angeordnet ist. Außerdem ist im unteren Bereich des Regals 2 eine Durchführung 19 vorgesehen, die zu einem Kommissionierplatz 20 führt.

Das in den Figuren 1 bis 3 beschriebene Regallager kann als Zwischenlager folgendermaßen genutzt werden. Über die Zuführbahn 15 werden einzelne Lastträger, Tablare 4 oder Behälter 5, 6 oder 7 in das Regallager eingebracht, mittels des Gassenförderers 10 vor ein entsprechendes Fach befördert und dann mit dem Ladeförderer 12 der Lastaufnahme 11 in das Fach befördert. Entsprechend den Anforderungen am Kommissionierplatz 20 werden aus den verschiedenen Fächern einzelne Behälter herausgeholt und zum Kommissionierplatz 20 gebracht. Nach Entnahme bestimmter Waren aus dem Behälter kann dieser wieder zurück in ein Fach oder über die Rückführbahn 17 in ein Hauptlager transportiert werden.

Die Arbeitsweise des Ladeförderers soll nunmehr anhand der Figuren 4 und 5 erläutert werden. Der Ladeförderer 12, der auf der Lastaufnahme 11 sitzt, ist im vorliegenden Beispiel als Rollenförderer mit vier Rollen 21, 22, 23 und 24 gezeigt, die von einem Motor 25 über eine Kette oder einen Gurt 26 angetrieben werden. Die se Rollen könnten aber auch auf andere,nicht dargestellte Weise, z.B. über eine Königswelle oder über Riemen, angetrieben werden. Die beiden äußeren Rollen 21 und 24 tragen auf ihren Wellen jeweils ein Zahnrad 27 bzw. 28, welches mit einem vorgelagerten Antriebs-Zahnrad 29 bzw. 30 kämmt. Auf diese Weise wird die Drehrichtung der AntriebsZahnräder 29 und 30 umgekehrt.

In den einzelnen Fächern sind die bereits erwähnten Rollen 8 gelagert. Außerdem ist am Facheingang jeweils eine zusätzliche Rolle 31 vorgesehen, auf deren Welle ein Abtriebszahnrad 32 sitzt. Diese Rollen 31 bzw. das Abtriebszahnrad 32 sind mit den übrigen Rollen 8 des Faches über eine Antriebskette 33 oder auf andere Weise, zum Beispiel über einen Riemen, gekoppelt.

Um das Antriebs-Zahnrad 29 mit dem Abtriebszahnrad 32 eines Faches in Eingriff zu bringen, ist die Lastaufnahme 11 verschiebbar auf dem Gassenförderer 10 gelagert, was durch die Rollen 34 schematisch angedeutet ist. Zu dieser Verschiebung dient eine Antriebsvorrichtung 35, die über ein schematisch angedeutetes Zahnrad 36 und eine Zahnstange 37 eine Horizontalbewegung wahlweise zu einem der Regale 1 oder 2 erzeugen kann.

Soll nun aus einem Fach 3 ein Behälter entnommen werden, so wird der Gassenförderer 10 zunächst so verfahren, daß sich die Lastaufnahme 11 vor dem betreffenden Regalfach 3 befindet. Danach wird über den Antrieb 35 die Lastaufnahme in Richtung des Pfeiles 38 verfahren, bis das Antriebs-Zahnrad 29 mit dem Abtriebszahnrad 32 in Eingriff ist und so ein Stirnradgetriebe bildet. Durch die vorher erwähnte Drehrichtungsumkehr wird so erreicht, daß der Fachförderer die gleiche Transportrichtung wie der Ladeförderer besitzt.

Für Transporte in das bzw. aus dem Regal 2 kann die Lastaufnahme entsprechend in der entgegengesetzten Richtung verfahren werden, so daß das Antriebsrad 30 mit einem entsprechenden Abtriebsrad 32 in Eingriff gelangt. Im übrigen könnten natürlich die Antriebsräder und Abtriebsräder jeweils an beiden Enden der Rollen 21 und 24 bzw. 8 und 31 vorgesehen werden, falls dies aus Gründen der Kraftverteilung erforderlich wäre. Auch sei darauf hingewiesen, daß die erfindungsgemäße Übertriebs-Anordnung in gleicher Weise angewendet werden kann, wenn die Fächer des Regals nicht nur wie im Ausführungsbeispiel in einer vertikalen Reihe angeordnet sind, sondern auch jeweils mehrere Fächer horizontal aneinander gereiht sind. In diesem Fall könnte der Gassenförderer auch horizontal bewegbar sein, so daß der auf ihm angeordnete Ladeförderer in gleicher Weise, wie beschrieben, an jedes beliebige Fach angekoppelt werden kann.

## Patentansprüche

1. Vorrichtung zum Ein- und Auslagern von Lastträgern (4, 5, 6, 7) in Fächer (3) bzw. aus Fächern eines Regallagers (1, 2), welches neben einer Ladegasse (9) mindestens einseitig ein Regal (1, 2) mit einer Mehrzahl von übereinander und/oder nebeneinander angeordneten Fächern (3) zur Aufnahme von jeweils mindestens einem Lastträger (4, 5, 6, 7) aufweist, mit folgenden Merkmalen:
- in der Ladegasse (9) ist ein vertikal und/oder horizontal verfahrbarer Gassenförderer (10) vorgesehen, der eine Lastaufnahme (11) mit einem horizontalen Ladeförderer (12) trägt, welcher seinerseits eine Antriebseinrichtung (25) aufweist,
**gekennzeichnet durch** folgende Merkmale:
- die Lastaufnahme (11) besitzt jeweils an ihrer dem Regal (1, 2) zugewandten Seite ein von der Antriebseinrichtung (25) des Ladeförderers (12) angetriebenes Antriebsrad (13; 29,30),
- in jedem Fach (3) ist ein Fachförderer (8, 31, 33) zur Horizontalbewegung der Lastträger (4, 5, 6, 7) vorgesehen,
- jedes Fach (3) besitzt an seinem zur Ladegasse (9) offenen Ende ein mit dem Fachförderer (8, 31, 33) gekoppeltes Abtriebsrad (14; 32), das derart gelagert ist, daß bei Annäherung des Ladeförderers (12; 21, 22, 23, 24, 26) an ein Fach (3) das Antriebsrad (13; 29, 30) mit dem Abtriebsrad (14; 32) des Faches stirnseitig in Eingriff gelangt und die Bewegung der Antriebseinrichtung auf den Fachförderer überträgt.

2. Vorrichtung nach Anspruch 1,
**dadurch gekennzeichnet,**
**daß** das Antriebsrad (13) und das Abtriebsrad (14) jeweils Reibräder sind.

3. Vorrichtung nach Anspruch 1,
**dadurch gekennzeichnet,**
**daß** das Antriebsrad (29, 30) und das Abtriebsrad (32) jeweils Zahnräder sind.

4. Vorrichtung nach Anspruch 2 oder 3,
**dadurch gekennzeichnet,**
**daß** das Antriebsrad (29, 30) und das Abtriebsrad (32) unterschiedliche Durchmesser aufweisen.

5. Vorrichtung nach einem der Ansprüche 1 bis 4,
**dadurch gekennzeichnet,**
**daß** beiderseits der Ladegasse (9) ein Regal (1, 2) angeordnet ist und daß die Lastaufnahme (11) an beiden Enden je ein Antriebsrad (29, 30) aufweist.

6. Vorrichtung nach einem der Ansprüche 1 bis 5,
**dadurch gekennzeichnet,**
**daß** die Fachförderer (8, 31) und/oder der Ladeförderer (21, 22,23, 24) jeweils als Rollenbahnen ausgebildet sind.

7. Vorrichtung nach einem der Ansprüche 1 bis 5,
**dadurch gekennzeichnet,**
**daß** die Fachförderer und/oder der Ladeförderer jeweils als Laufbandförderer ausgebildet sind.

8. Vorrichtung nach einem der Ansprüche 1 bis 7,
**dadurch gekennzeichnet,**
**daß** die Lastaufnahme (11) auf dem Gassenförderer (10) jeweils durch einen Querantrieb (35, 36, 37) in Richtung auf das Regal (1, 2) verschiebbar ist.

## Claims

1. Apparatus which is intended for storing load carriers (4, 5, 6, 7) in compartments (3), and retrieving them from compartments, of a rack store (1, 2) and, alongside a loading aisle (9), has, on at least one side, a rack (1, 2) with a plurality of compartments (3) which are arranged one above the other and/or one beside the other and are intended for accommodating in each case at least one load carrier (4, 5, 6, 7), having the following features:
- provided in the loading aisle (9) is a vertically and/or horizontally displaceable aisle conveyor (10) which bears a load-bearing means (11) with a horizontal loading conveyor (12) which, for its part, has a drive device (25),
**characterized by** the following features:
- the load-bearing means (11), on its side which is directed towards the rack (1, 2) in each case, has a drive wheel (13; 29, 30) which is driven by the drive device (25) of the loading conveyor (12),
- each compartment (3) contains a compartment conveyor (8, 31, 33) for moving the load carriers (4, 5, 6, 7) horizontally,
- each compartment (3), at its end which is open in relation to the loading aisle (9), has a driven wheel (14; 32), which is coupled to the compartment conveyor (8, 31, 33) and is mounted such that, when the loading conveyor (12; 21, 22, 23, 24, 26) approaches a compartment (3), the drive wheel (13; 29, 30) engages on the end side with the driven wheel (14; 32) of the compartment and transmits the movement of the drive device to the compartment conveyor.

2. Apparatus according to Claim 1, **characterized in that** the drive wheel (13) and the driven wheel (14) are each frictional wheels.

3. Apparatus according to Claim 1, **characterized in that** the drive wheel (29, 30) and the driven wheel (32) are each gearwheels.

4. Apparatus according to Claim 2 or 3, **characterized in that** the drive wheel (29, 30) and the driven wheel (32) have different diameters.

5. Apparatus according to one of Claims 1 to 4, **characterized in that** a rack (1, 2) is arranged on both sides of the loading aisle (9) and **in that** the load-bearing means (11) has in each case one drive wheel (29, 30) at both ends.

6. Apparatus according to one of Claim 1 to 5, **characterized in that** the compartment conveyors (8, 31) and/or the loading conveyor (21, 22, 23, 24) are each designed as roller conveyors.

7. Apparatus according to one of Claims 1 to 5, **characterized in that** the compartment conveyors and/or the loading conveyor are each designed as a belt conveyor.

8. Apparatus according to one of Claims 1 to 7, **characterized in that** the load-bearing means (11) on the aisle conveyor (10) can be displaced in the direction of the rack (1, 2) in each case by a transverse drive (35, 36, 37).

## Revendications

1. Dispositif pour stocker et prélever des porte-charges (4, 5, 6, 7) dans des casiers (3) ou respectivement à partir de casiers d'un magasin (1, 2) à rayonnages qui comporte, à côté d'une allée (9) de chargement, au moins d'un côté un rayonnage (1, 2) pourvu d'une pluralité de casiers (3) disposés en superposition et/ou en juxtaposition et destinés à recevoir chacun au moins un porte-charges (4, 5, 6, 7), comprenant les caractéristiques suivantes :
- il est prévu dans l'allée (9) de chargement un convoyeur (10) d'allée pouvant être déplacé verticalement et/ou horizontalement, qui porte un récepteur (11) de charge pourvu d'un convoyeur (12) de chargement horizontal, qui comporte lui-même un moyen (25) d'entraînement,
**caractérisé par** les caractéristiques suivantes :
- le récepteur (11) de charge possède respectivement, sur son côté tourné vers le rayonnage (1, 2), une roue (13 ; 29, 30) menante entraînée par le moyen (25) d'entraînement du convoyeur (12) de chargement,
- il est prévu dans chaque casier (3) un convoyeur (8, 31, 33) de casier pour le déplacement horizontal des porte-charges (4, 5, 6, 7),
- chaque casier (3) possède, à son extrémité ouverte vers l'allée (9) de chargement, une roue (14; 32) menée qui est couplée au convoyeur (8, 31, 33) de casier et qui est montée de telle sorte que, lors du rapprochement du convoyeur (12; 21, 22, 23,24, 26) de chargement d'un casier (3), la roue (13 ; 29, 30) menante entre en engagement du côté frontal avec la roue (14; 32) menée du casier et transmet le mouvement du moyen d'entraînement sur le convoyeur de casier.

2. Dispositif suivant la revendication 1, **caractérisé en ce que** la roue (13) menante et la roue (14) menée sont respectivement des roues de friction.

3. Dispositif suivant la revendication 1, **caractérisé en ce que** la roue (29, 30) menante et la roue (32) menée sont respectivement des roues dentées.

4. Dispositif suivant la revendication 2 ou 3, **caractérisé en ce que** la roue (29, 30) menante et la roue (32) menée possèdent des diamètres différents.

5. Dispositif suivant l'une des revendications 1 à 4, **caractérisé en ce qu'**un rayonnage (1, 2) est disposé de part et d'autre de l'allée (9) de chargement, et **en ce que** le récepteur (11) de charge comporte une roue (29, 30) menante respective à chaque extrémité.

6. Dispositif suivant l'une des revendications 1 à 5, **caractérisé en ce que** les convoyeurs (8, 31) de casier et/ou le convoyeur (21, 22, 23, 24) de chargement sont respectivement réalisés sous forme de convoyeurs à rouleaux.

7. Dispositif suivant l'une des revendications 1 à 6, **caractérisé en ce que** les convoyeurs de casier et/ou le convoyeur de chargement sont respectivement réalisés sous forme de convoyeurs à bande transporteuse.

8. Dispositif suivant l'une des revendications 1 à 7, **caractérisé en ce que** le récepteur (11) de charge peut, par un entraînement (35, 36, 37) transversal, être respectivement déplacé en direction du rayonnage (1, 2) sur le convoyeur (10) d'allée.
